# EUROPEAN PATENT APPLICATION

(11) **EP 4 510 355 A1**
(43) Date of publication of application: **19.02.2025**
(21) Application number: 24780987.4
(22) Date of filing: 19.01.2024
(51) Int. Cl.: H01M 50/446, H01M 50/449, H01M 50/42, H01M 50/423, H01M 10/0569, H01M 10/052

(54) **SEPARATOR FOR ELECTROCHEMICAL DEVICE, AND ELECTROCHEMICAL DEVICE COMPRISING SAME**

(30) Priority: 24.03.2023 KR 20230038631
(71) Applicant: LG Energy Solution, Ltd., Seoul 07335 (KR)
(72) Inventor: KIM, Ji Yeon, Daejeon 34122 (KR); SUNG, Dong Wook, Daejeon 34122 (KR); KA, Kyung Ryun, Daejeon 34122 (KR); SUNG, In Hyouk, Daejeon 34122 (KR); KIM, Ji Hyeon, Daejeon 34122 (KR)
(74) Representative: Hoffmann Eitle
(86) International application number: PCT/KR2024/000984
(87) International publication number: WO 2024/204992

(57) **Abstract**

The present invention relates to a separator for an electrochemical device includes a porous polymer substrate, and a porous coating layer formed on at least one surface of the porous polymer substrate, wherein the porous coating layer contains an acrylic acid-based binder, an acrylamide-based binder, and inorganic particles, and wherein the porous coating layer contains about 90% by weight to 96% by weight of the inorganic particles based on the total weight of the porous coating layer, and a weight ratio of the acrylic acid-based binder and the acrylamide-based binder is about 3:7 to 7:3.

## Description

### Technical Field

This application is based on and claims priority from Korean Patent Application No. 10-2023-0038631, filed on March 24, 2023 with the Korean Intellectual Property Office, the disclosure of which is incorporated herein in its entirety by reference.

The present disclosure relates to a separator for an electrochemical device and an electrochemical device including the same.

### Background Art

Electrochemical devices convert chemical energy into electrical energy using electrochemical reactions, and electrochemical devices including lithium secondary batteries have been widely used in recent years due to their high energy density and voltage, long cycle life, and versatility in a variety of applications.

The lithium secondary battery may include an electrode assembly manufactured with an anode, a cathode, and a separator disposed between the anode and the cathode, and the electrode assembly is accommodated in a case with an electrolyte. The separator may include a porous coating layer containing a polymer binder and inorganic particles on at least one surface of a porous substrate. The inorganic particles may be connected to other inorganic particles by the polymer binder to form an interstitial volume, and the lithium ions may migrate through the interstitial volume. In addition to immobilizing the inorganic particles, the polymer binder may also provide adhesion to the porous coating layer, and the porous coating layer may be adhered to the porous substrate and the electrode, respectively.

### DISCLOSURE

### Technical Problem

The present disclosure provides a separator for an electrochemical device having a reduced dimensional change rate in a high temperature wet state, a manufacturing method thereof, and an electrochemical device including the separator.

### Technical Solution

The present disclosure relates to obtaining a separator having dimensional stability under high temperature and wet state conditions while maintaining a relatively low content of polymer binder in the porous coating layer.

According to an aspect of the present disclosure, a separator for an electrochemical device includes a porous polymer substrate, and a porous coating layer formed on at least one surface of the porous polymer substrate, wherein the porous coating layer contains an acrylic acid-based binder, an acrylamide-based binder, and inorganic particles. The porous coating layer contains about 90% by weight to about 96% by weight of the inorganic particles based on the total weight of the porous coating layer, and a weight ratio of the acrylic acid-based binder and the acrylamide-based binder is about 3:7 to 7:3.

The acrylamide-based binder may have a weight average molecular weight of about 400,000 to 1,000,000.

The porous coating layer may be formed by coating a coating slurry containing the acrylic acid-based binder, the acrylamide-based binder, inorganic particles, a dispersant, and a dispersion medium, on the porous polymer substrate, and pH of the coating slurry may be about 3 to 9.

The acrylic acid-based binder may have a repeating unit including one or more monomers selected from the group consisting of acrylic acid and methacrylic acid.

The acrylamide-based binder may have a repeating unit including one or more monomers selected from the group consisting of acrylamide, methacrylamide, N-ethylacrylamide, ethylmethacrylamide, N-propylacrylamide, N-isopropylacrylamide, N-isopropylmethacrylamide, N-butylacrylamide, and N-butylmethacrylamide.

A content of the acrylic acid-based binder in the porous coating layer may be greater than or equal to a content of the acrylamide-based binder.

According to another aspect of the present disclosure, there is provided an electrochemical device including an anode, a cathode, and a separator disposed between the anode and the cathode, in which the separator is a separator for an electrochemical device of the one aspect described above.

The electrochemical device may be a lithium secondary or rechargeable battery.

The electrochemical device may further include an electrolyte containing a solvent in which ethylene carbonate (EC) and ethyl methyl carbonate (EMC) are mixed in a weight ratio of about 3:7, or a solvent in which ethylene carbonate (EC), ethyl methyl carbonate (EMC), and dimethyl carbonate (DMC) are mixed in a weight ratio of about 20:5:75.

### Advantageous Effects

The separator for an electrochemical device according to the present disclosure may provide improved dimensional stability in a dry state and a wet state where the electrochemical device is impregnated with an electrolyte solution. For example, the separators may exhibit a dry state heat shrinkage of about 5% or less at high temperature conditions of 200 °C or more, and a wet state heat shrinkage rate of about 10% or less at high temperature conditions of 130 °C or more, to prevent exposure of electrodes due to heat shrinkage of the separators.

### Mode for Invention

Hereinafter, each feature of the present disclosure will be described in detail to facilitate the practicing by one of ordinary skill in the art to which the present disclosure belongs. The present disclosure may be implemented in various different forms, and is not limited or restricted by the embodiments described herein below.

As used herein, the term "including" is used to list materials, compositions, devices, and methods useful in the present disclosure and is not limited to the listed examples.

As used herein, the words "about," "approximately," and "substantially" are used to mean a range or approximation of a numerical value or degree, taking into account inherent manufacturing and material tolerances, and are used to prevent infringers from taking unfair advantage of the disclosure where precise or absolute numbers are provided to aid in the understanding of the disclosure.

As used herein, the term "electrochemical device" may refer to a primary battery, a secondary battery, or a supercapacitor.

As used herein, the words "wet state, " may refer to a state where the separator is impregnated with at least a portion of the electrolyte, and the word "dry state" may refer to a dry state where the separator is not impregnated with the electrolyte.

As used herein, the term "durability" may mean the ability of a binder to exhibit adhesion or mechanical strength as an inherent property without swelling or deformation upon contact with an electrolyte.

In the electrode assembly that makes up a secondary battery, the separator is a film material that isolates the two electrodes (anode/cathode) to prevent electrical short circuits caused by physical contact, and has a function of being ionically conductive by providing a pathway for ions to move between the two electrodes through the electrolyte contained in the micropores.

The porous coating layer formed on one side of the separator includes a polymer binder and inorganic particles and may prevent heat shrinkage of the porous polymeric substrate. The separator including the porous coating layer exhibits good dimensional stability in the dry state without electrolyte, but in the wet state where the separator is impregnated with electrolyte, the adhesion of the polymer binder may be reduced as the polymer binder expands and swells with the electrolyte, or as the separator is exposed to a temperature of about 130 °C or higher depending on the operating conditions of the lithium secondary battery containing the separator. That is, the separator tends to shrink significantly under these high-temperature wet state conditions, as the adhesion of the porous coating layer decreases. For example, cylindrical batteries in which the electrode assembly is wound and inserted into the case with tension applied to the electrode assembly, require less adhesion between the electrodes and separator than pouch-type batteries, and therefore contain less polymer binder, resulting in lower dimensional stability in the wet state.

The present disclosure provides a separator having improved dimensional stability under high temperature and wet state conditions while maintaining a relatively low content of polymer binder in the porous coating layer.

According to an embodiment of the present disclosure, a separator for an electrochemical device includes a porous polymer substrate, and a porous coating layer formed on at least one surface of the porous polymer substrate, wherein the porous coating layer contains an acrylic acid-based binder, an acrylamide-based binder, and inorganic particles. The porous coating layer contains about 90% by weight to 96% by weight of the inorganic particles based on the total weight of the porous coating layer, and a weight ratio of the acrylic acid-based binder and the acrylamide-based binder is about 3:7 to 7:3.

The porous polymer substrate may be a porous membrane having a plurality of pores, which electrically insulates the anode and cathode to prevent short circuit. For example, when the electrochemical device is a lithium secondary battery, the porous polymer substrate may be an ion conductive barrier that allows lithium ions to pass through while blocking electrical contact between the anode and the cathode. At least a portion of the pores may form a three-dimensional network communicating with the surface and interior of the porous polymer substrate, and fluid may pass through the porous polymer substrate through the pores.

The porous polymer substrate may be a material that is physically and chemically stable to an electrolyte that is an organic solvent. Examples of the porous polymer substrate include resins, for example, polyolefins such as polyethylene, polypropylene, and polybutylene, polyvinyl chloride, polyethylene terephthalate, polycycloolefins, polyethersulfone, polyamides, polyimides, polyimidamides, nylon, polytetrafluoroethylene, and copolymers or mixtures thereof, but not limited thereto. For example, polyolefin-based resins may be used. The polyolefin-based resins are suitable for manufacturing electrochemical devices with higher energy density because they may be processed to relatively small thicknesses and are easy to apply coating slurries.

The porous polymer substrate may have a monolayer or multilayer structure. The porous polymer substrate may include two or more polymer resin layers having different melting points (Tm) to provide shutdown capability during high temperature runaway of the battery. For example, the porous polymeric substrate may include a polypropylene layer having a relatively high melting point and a polyethylene layer having a relatively low melting point. The porous polymer substrate may be a three-layer structure in which polypropylene, polyethylene, and polypropylene are laminated in this order. As the temperature of the battery rises above a predetermined temperature, the polyethylene layer melts and shuts down the pores, thereby preventing thermal runaway of the battery.

The thickness of the porous polymer substrate may be approximately 1 µm or more and 100 µm or less. For example, the thickness of the porous polymer substrate may be approximately 10 µm or more and 90 µm or less, 20 µm or more and 80 µm or less, 30 µm or more and 70 µm or less, or 40 µm or more and 60 µm or less. For example, the thickness of the polymer substrate may be 1 µm or more and 30 µm or less. For example, the thickness of the polymer substrate may be about 5 µm or more and 15 µm or less, or 8 µm or more and 13 µm or less. When the thickness of the porous polymer substrate is adjusted within the above-mentioned range, the amount of the active material included in the electrochemical device may be increased by minimizing the volume of the electrochemical device while electrically insulating the anode and the cathode.

The porous polymer substrate may include pores having an average diameter of approximately 0.01 µm or more and 1 µm or less. For example, the size of the pores contained in the porous polymer substrate may be about 0.01 µm or more and 0.09 µm or less, 0.02 µm or more and 0.08 µm or less, 0.03 µm or more and 0.07 µm or less, or 0.04 µm or more and 0.06 µm or less. For example, the size of the pores may be about 0.02 µm or more and 0.06 µm or less. When the pore size of the porous polymer substrate is adjusted within the above-mentioned range, the permeability and ionic conductivity of the entire prepared separator may be controlled.

The porous polymer substrate may have a permeability of approximately 10 s/100 cc or more and 100 s/100 cc or less. For example, the porous polymer substrate may have a permeability of 10 s/100 cc or more and 90 s/100 cc or less, 20 s/100 cc or more and 80 s/100 cc or less, 30 s/100 cc or more and 70 s/100 cc or less, or 40 s/100 cc or more and 60 s/100 cc or less. For example, the permeability of the porous polymer substrate may be about 50 s/100 cc or more and 70 s/100 cc or less. When the permeability of the porous polymer substrate is within the above-mentioned range, the permeability of the prepared separator may be provided in a range suitable for securing the output and cycle characteristics of the electrochemical device.

The permeability (s/100 cc) means a time (in seconds) it takes for 100 cc of air to pass through a predetermined area of a porous polymer substrate or a separator under constant pressure. The permeability may be measured using a Gurley densometer in accordance with ASTM D 726-58, ASTM D726-94, or JIS-P8117. For example, a 4110N instrument from Gurley may be used to measure the time for 100 cc of air to pass through a sample of 1 square inch (or 6.54 cm²) under a pressure of 0.304 kPa of air or 1.215 kN/m² of water. For example, the ASAHI SEIKO EG01-55-1MR instrument may be used to measure the time for 100 cc of air to pass through a sample of 1 square inch under a constant pressure of 4.8 inches of water at room temperature.

The porous polymer substrate may have a porosity of approximately 10 vol% or more and 60 vol% or less. For example, the porosity of the porous polymer substrate may be about 15 vol% or more and 55 vol% or less, 20 vol% or more and 50 vol% or less, 25 vol% more and 45 vol% or less, or 30 vol% or more and 40 vol% or less. For example, the porosity of the porous polymer substrate may be about 30 vol% or more and 50 vol% or less. When the porosity of the porous polymer substrate is within the above-mentioned range, the ionic conductivity of the prepared separator may be provided in a range suitable for securing the output and cycle characteristics of the electrochemical device.

The porosity refers to a ratio of a volume of pores to the total volume of the porous polymer substrate. The porosity may be measured by a method known in the art. For example, the porosity may be measured by Brunauer Emmett Teller (BET) measurement using adsorption of nitrogen gas, capillary flow porometer, or water or mercury infiltration method.

The porous coating layer is formed on at least one surface of the porous polymer substrate, and includes a polymer binder and inorganic particles, and the polymer binder may include an acrylic acid-based binder and an acrylamide-based binder.

The porous coating layer may be formed by coating at least one surface of the porous polymer substrate with a coating slurry containing an acrylic acid-based binder, an acrylamide-based binder, inorganic particles, a dispersant, and dispersion medium. For example, the separator may be prepared by applying the coating slurry to at least one surface of the porous polymer substrate, followed by drying to remove the dispersion medium. Since the inorganic particles included in the porous coating layer are connected by the acrylic acid-based binder and the acrylamide-based binder to form an interstitial volume, the porous coating layer is adhered to the porous polymer substrate while allowing lithium ions to pass through the interstitial volume, thereby preventing heat shrinkage of the porous polymer substrate.

The coating slurry may contain a dispersion medium to dissolve or disperse at least a portion of the acrylic acid-based binder or the acrylamide-based binder, and disperse the inorganic particles. The coating slurry may be used in which the polymer binder and inorganic particles are uniformly dispersed by controlling the type and content of the dispersion medium. Examples of the dispersion medium include water, ethanol, acetone, isopropyl alcohol (IPA), dimethylacetamide (DMAc), dimethylformamide (DMF), N-methyl-2-pyrrolidone (NMP), acetonitrile (acetonitrile), and combinations thereof. The above-described type of dispersion medium may be used to form a porous coating layer in which inorganic particles are uniformly dispersed.

The coating slurry may include a dispersant to maintain uniform dispersion of the acrylic acid-based binder, the acrylamide-based binder, and the inorganic particles. Examples of the dispersant include one or more selected from the group consisting of oil-soluble polyamines, oil-soluble amine compounds, fatty acids, fatty alcohols, sorbitan fatty acid esters, tannic acid, pyrogallic acid, and polyacrylic acid. For example, the dispersant may be a polyacrylic acid-based polymer dispersant. By using the above-described type of dispersant, it is possible to improve the stability of the coating slurry, and secure the uniformity of the porous coating layer formed from the coating slurry.

The dispersant may be contained in an amount of approximately 0.01% by weight or more and 5% by weight or less based on the total weight of the coating slurry. For example, the content of the dispersant may be 0.1% by weight or more and 4% by weight or less, 0.5% by weight or more and 3% by weight or less, or 1% by weight or more and 2% by weight or less. For example, the content of the dispersant may be about 3% by weight or more and 5% by weight or less. When the content of the dispersant is adjusted within the above-mentioned range, uniform dispersion and stability of the polymer binder and the inorganic particles contained in the coating slurry may be achieved.

The coating slurry containing the dispersant may have pH of approximately 3 to 9. For example, the pH of the coating slurry may be about 3.5 or more and 8.5 or less, 4.0 or more and 8.0 or less, 4.5 or more and 7.5 or less, 5.0 or more and 7.0 or less, or 5.5 or more and 6.5 or less. For example, the pH of the coating slurry may be about 5.5 to 8.5, or about 6.0 to 8.0. The pH of the coating slurry may be adjusted by changing the type or physical properties of the dispersant. For example, the dispersant may be a polyacrylic acid-based polymer dispersant, and the pH of the coating slurry may be adjusted by adjusting the degree of substitution of the polyacrylic acid-based polymer dispersant. For example, the pH of the coating slurry may be adjusted by controlling the degree of substitution of -COOH with -COOH⁻Na⁺ in the polyacrylic acid-based polymer dispersant. When the pH of the coating slurry is adjusted in the above-mentioned range, the cohesion with inorganic particles is improved through uniform dispersion of the polymer binder, especially the acrylic acid-based binder, contained in the coating slurry, thereby reducing the heat shrinkage of the porous coating layer and the separator provided therewith.

The coating slurry containing the dispersant may have a viscosity of approximately 10 cps or more and 500 cps or less. For example, the viscosity of the coating slurry may be 50 cps or more and 450 cps or less, 100 cps or more and 400 cps or less, 150 cps or more and 350 cps or less, or 200 cps or more and 300 cps or less. For example, the viscosity of the coating slurry may be about 10 cps or more and 100 cps or less, or about 10 cps or more and 50 cps or less. When the viscosity of the coating slurry exceeds 500 cps, lumps with an average particle size (D99) of approximately 100 µm are formed, which makes it difficult to manufacture a separator through continuous application on a porous polymer substrate, so that it is difficult to secure productivity.

The coating slurry may further include an additive such as a surfactant, an antifoaming agent, a flame retardant, and a wetting agent. The additive may be contained in an amount of approximately 0% by weight or more and 10% by weight or less based on the total weight of the coating slurry. For example, the content of the additive is approximately 0.01% by weight or more and 9% by weight or less, 0.1% by weight or more and 8% by weight or less, 1% by weight or more and 7% by weight or less, 2% by weight or more and 6% by weight or less, or 3% by weight or more and 5% by weight or less. For example, the content of the additive may be approximately 1% by weight or more and 5% by weight or less. When the content of the additive within the above-mentioned range, dimensional stability and flame retardancy of the porous coating layer formed by the coating slurry may be secured.

The dispersion medium contained in the coating slurry may be removed by drying or heating after the formation of the porous coating layer. For example, the porous coating layer may contain 5 ppm or less of the dispersion medium. For example, the porous coating layer may be composed of an acrylic acid-based binder, an acrylamide-based binder, inorganic particles, and a dispersant. In the process of removing the dispersion medium, a plurality of pores may be formed on the surface and inside the porous coating layer. The pores may include an interstitial volume formed by connecting adjacent inorganic particles by the acrylic acid-based binder, the acrylamide-based binder, or both, and may have a structure in which a three-dimensional network is formed to allow fluid to pass therethrough.

The thickness of the porous coating layer may be approximately 1 µm or more and 15 µm or less. For example, the thickness of the porous coating layer may be approximately 2 µm or more and 14 µm or less, 3 µm or more and 13 µm or less, 4 µm or more and 12 µm or less, 5 µm or more and 11 µm or less, 6 µm or more and 10 µm or less, or 7 µm or more and 9 µm or less. For example, the thickness of the porous coating layer may be about 1 µm or more and 5 µm or less. For example, the thickness of the porous coating layer may be about 1.5 µm or more and 3.5 µm or less. When the thickness of the porous coating layer is adjusted within the above-mentioned range, it is possible to minimize shrinkage of the porous polymer substrate and achieve stable adhesion to the porous polymer substrate.

The acrylic acid-based binder may bind the inorganic particles contained in the porous coating layer and provide adhesion to the porous polymer substrate of the porous coating layer. The acrylic acid-based binder may have a repeating unit including one or more monomers selected from the group consisting of acrylic acid and methacrylic acid. For example, the acrylic acid-based binder may be polyacrylic acid (PAA).

When the acrylic acid-based binder is contained in a coating slurry, dispersibility may be determined by the pH concentration of the coating slurry. When the pH of the coating slurry is 3 to 9, the binding of the inorganic particles by the acrylic acid-based binder and the resulting dimensional stability of the porous coating layer may be secured.

The weight average molecular weight (Mw) of the acrylic acid-based binder may be approximately 50,000 or more and 400,000 or less. For example, the weight average molecular weight of the acrylic acid-based binder may be about 100,000 or more and 350,000 or less, 150,000 or more and 300,000 or less, or 200,000 or more and 250,000 or less. For example, the weight average molecular weight of the acrylic acid-based binder may be about 100,000 or more and 200,000 or less. When the weight average molecular weight of the acrylic acid-based binder is adjusted within the above-mentioned range, it is possible to implement dense coalescence of the inorganic particles through uniform mixing with inorganic particles in the porous coating layer, thereby reducing the heat shrinkage rate of the separator.

In the present disclosure, the weight average molecular weight of the polymer binder may be measured by gel permeation chromatography (GPC) (PL GPC220, Agilent Technologies). For example, the weight average molecular weight may be determined by using trichlorobenzene (TCB) as a solvent in a PL Olexis (Polymer Laboratories) column (column temperature: 160 °C), and using an Agilent High Temperature RI detector under the conditions of sample concentration of 1.0 mg/mL, flow rate of 1.0 mL/min, and injection volume of 200 µl (corrected using a cubic function, reference: polystyrene).

The acrylamide-based binder may be included in the porous coating layer to impart resistance to electrolyte in the porous coating layer. The acrylamide-based binder may have a repeating unit including one or more monomers selected from the group consisting of acrylamide, methacrylamide, N-ethylacrylamide, ethylmethacrylamide, N-propylacrylamide, N-isopropylacrylamide, N-isopropylmethacrylamide, N-butylacrylamide, and N-butylmethacrylamide. The butylacrylamide may refer to sec-butylacrylamide and ter-butylacrylamide, and the butylmethacrylamide may refer to sec-butylmethacrylamide and terbutylmethacrylamide. For example, the acrylamide-based binder may be polyacrylamid (PAM).

The weight average molecular weight (Mw) of the acrylamide-based binder may be approximately 400,000 or more and 1,000,000 or less. For example, the weight average molecular weight of the acrylamide-based binder may be 450,000 or more and 950,000 or less, 500,000 or more and 900,000 or less, 550,000 or more and 850,000 or less, 600,000 or more and 800,000 or less, or 650,000 or more and 750,000 or less. For example, the weight average molecular weight of the acrylamide-based binder may be about 400,000 or more and 900,000 or less. When the weight average molecular weight of the acrylamide-based binder is within the above-mentioned range, the viscosity of the coating slurry does not exceed 500 cps to form a porous coating layer, thereby reducing the heat shrinkage rate of the separator.

The porous coating layer may include the acrylic acid-based binder and the acrylamide-based binder in a weight ratio of approximately 3:7 to 7:3. For example, the porous coating layer may include the acrylic acid-based binder and the acrylamide-based binder in a weight ratio of about 4:6 to 6:4, preferably 4.5:5.5 to 5.5:4.5. For example, the porous coating layer may have a content of the acrylic acid-based binder that is greater than or equal to a content of the acrylamide-based binder, while satisfying the above-mentioned range. For example, the porous coating layer may include the acrylic acid-based binder and the acrylamide-based binder at a weight ratio of about 6:4 to 5:5.

The acrylic acid-based binder may interact more readily with the inorganic particles than the acrylamide-based binder, thereby contributing to the formation of the interstitial volume described above. For example, the acrylic acid-based binder may exhibit electrostatic attraction to the inorganic particles via a carboxyl group or form a hydrogen bond. The acrylamide-based binder exhibits a greater modulus than the acrylic acid-based binder, which may contribute to ensuring durability of the separator by maintaining the structure of the porous coating layer even in a wet state where the separator is impregnated with an electrolyte. When the contents of the acrylic acid-based binder and the acrylamide-based binder are adjusted within the above-mentioned range, the formation of the interstitial volume by the acrylic acid-based binder and the structural stability of the pore coating layer by the acrylamide-based binder may be secured at the same time. A separator having a porous coating layer that satisfies the above-mentioned range may have a reduced heat shrinkage rate in a wet state. When the content of the acrylic acid-based binder exceeds the above-mentioned range, the structural stability of the porous coating layer may decrease in the wet state, thereby causing rapid heat shrinkage. When the content of the acrylamide-based binder exceeds the above-mentioned range, the binding of inorganic particles may not be sufficient in the dry state, thereby causing rapid heat shrinkage.

The porous coating layer includes the acrylic acid-based binder and the acrylamide-based binder, separately, and does not include a copolymer of the acrylic acid-based binder and the acrylamide-based binder. The use in mixture of the acrylic acid-based binder and the acrylamide-based binder facilitates the adjustment of the weight average molecular weight and content ratio of the individual binders compared to the use of the copolymer, so that the above-described advantages based on the weight average molecular weight range and the advantages based on the content range may be easily achieved at the same time.

The porous coating layer may include approximately 90% by weight to 96% by weight of the inorganic particles based on the total weight of the porous coating layer. For example, the content of the inorganic particles may be about 90.5% by weight or more and 95.5% by weight or less, 91.0% by weight or more and 95.0% by weight or less, 91.5% by weight or more and 94.5% by weight or less, 92.0% by weight or more and 94.0% by weight or less, or 92.5% by weight or more and 93.5% by weight or less based on the total weight of the porous coating layer. For example, the content of the inorganic particles may be about 93% by weight or more and 96% by weight or less based on the total weight of the porous coating layer. As a separator with mechanical strength suitable for cylindrical batteries in the above-mentioned range, it is possible to manufacture a separator with reduced heat shrinkage in a wet state. Meanwhile, even if the content of the inorganic particles based on the total weight of the porous coating layer deviates from the above-mentioned range to some extent within the error range, for example, even if the content of the inorganic particles is slightly below 90% by weight or slightly exceeds 96% by weight, it still does not deviate from the spirit of the present disclosure.

The inorganic particles may be electrochemically stable. The inorganic particles are not particularly limited as long as oxidation and/or reduction reactions do not occur in the operating voltage range of the electrochemical device (*e.g.,* 0 to 5 V based on Li/Li⁺). In particular, the use of inorganic particles having a high permittivity may contribute to an increase in the dissociation of electrolyte salts, such as lithium salts, in the liquid electrolyte, thereby improving the ionic conductivity of the electrolyte. For the reasons described above, the inorganic particles may include highpermittivity inorganic particles having a dielectric constant of about 5 or more, and, for example, about 10 or more. Non-limiting examples of inorganic particles having a dielectric constant of 5 or more include BaTiO₃, Pb(Zr, Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, Al(OH)₃, SiC, AlOOH, TiO₂, and mixtures thereof.

Further, inorganic particles having a lithium ion transfer capacity, that is, inorganic particles that contain the element lithium but do not store lithium and have an ability to transfer lithium ions, may be used as the inorganic particles. Non-limiting examples of the inorganic particles having a lithium ion transfer capability include lithium phosphate (Li₃PO₄), lithium titanium phosphate (LiₓTi_{y}(PO₄)₃, 0<x<2, 0<y<3), lithium aluminum titanium phosphate (LiₓAl_{y}Ti₂(PO₄)₃, 0<x<2, 0<y<1, 0<z<3), (LiAlTiP)ₓO_{y} series glasses (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) such as Li_{3.25}Ge_{0.25}P_{O.75}S₄, lithium nitride (LiₓN_{y}, 0<x<4, 0<y<2) such as Li₃N, SiS₂ series glasses (LiₓSi_{y}S_{z}, 0<x<3, 0<y<2, 0<z<4) such as Li₃PO₄-Li₂S-SiS₂, and P₂S₅ series glasses (LiₓP_{y}S_{z}, 0<x<3, 0<y<3, 0<z<7) such as LiI-Li₂S-P₂S₅, or a mixture of two or more thereof.

Further, inorganic particles having flame retardancy may be used to impart flame retardant properties to the separator, or to prevent the temperature inside the electrochemical element from rising rapidly. Non-limiting examples of the inorganic particles having flame retardancy include Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, SiC, TiO₂, H₃BO₃, HBO₂, and mixtures thereof.

The average particle diameter (D50) of the inorganic particles may be approximately 50 nm or more and 5,000 nm or less. For example, the average particle diameter (D50) of the inorganic particles may be about 100 nm or more and 4,500 nm or less, 200 nm or more and 4,000 nm or less, 300 nm or more and 3,000 nm or less, 400 nm or more and 2,000 nm or less, or 500 nm or more and 1,000 nm or less. When the average particle diameter of the inorganic particles is less than approximately 50 nm, an additional polymer binder for bonding between the inorganic particles is required as the specific surface area increases, which is disadvantageous in terms of electrical resistance. When the average particle diameter of the inorganic particles exceeds 5,000 nm, the uniformity of the surface of the coating layer may decrease and damage to the porous polymer substrate or electrode may occur during lamination.

The aspect ratio of the inorganic particles may be approximately 1 or more and 2 or less. For example, the aspect ratio of the inorganic particles may be about 1.1 or more and 1.9 or less, 1.2 or more and 1.8 or less, 1.3 or more and 1.7 or less, or 1.4 or more and 1.6 or less. When the aspect ratio of the inorganic particles is adjusted within the above-mentioned range, it is possible to form a porous coating layer that facilitates the migration of the polymeric binder through the pores between the inorganic particles, and ultimately includes an interstitial volume that allows for lithium ion migration.

The BET specific surface area of the inorganic particles may be approximately 5 m²/g or more and 25 m²/g or less. For example, the BET specific surface area of the inorganic particles may be about 6 m²/g or more and 24 m²/g or less, 7 m²/g or more and 23 m²/g or less, 8 m²/g or more and 22 m²/g or less, 9 m²/g or more and 21 m²/g or less, 10 m²/g or more and 20 m²/g or less, 11 m²/g or more and 19 m²/g or less, 12 m²/g or more and 18 m²/g or less, 13 m²/g or more and 17 m²/g or less, or 14 m²/g or more and 26 m²/g or less. When the BET specific surface area of the inorganic particles is adjusted within the above-mentioned range, the migration of the polymer binder through the pores between the inorganic particles may be controlled.

The separator for the electrochemical device may have a permeability of approximately 50 s/100 cc or more and 150 s/100 cc or less. For example, the separator may have a permeability of about 60 s/ 100cc or more and 140 s/100 cc or less, 70 s/100 cc or more and 130 s/100 cc or less, 80 s/100 cc or more and 120 s/100 cc or less, or 90 s/100 cc or more and 110 s/100 cc or less. For example, the permeability of the separator may be about 100 s/100 cc or more and 120 s/100 cc or less. When the permeability of the separator is within the above-mentioned range, the output, stability, and cycle characteristics of the electrochemical device may be secured.

The thermal shrinkage rate of the separator for the electrochemical device may be approximately 10% or less. For example, the dry state heat shrinkage rate of the separator may be about 5% or less, and the wet state heat shrinkage rate may be 10% or less. For example, the dry state heat shrinkage rate may be a dimensional change rate based on exposure to 200 °C for 30 minutes, and the wet state heat shrinkage rate may be a dimensional change rate based on exposure to 135 °C for 30 minutes while the separator is impregnated in an electrolyte solution. For example, the dry state heat shrinkage rate of the separator may be about 5% or less in both the MD and TD directions, and the wet state heat shrinkage rate may be about 10% or less in both the MD and TD directions.

When a cell is manufactured using the separator for an electrochemical device, the cell may have an electrical resistance of approximately 0.5 Ohm or more and 1.5 Ohm or less. For example, the electrical resistance of the cell may be about 0.6 Ohm or more and 1.4 Ohm or less, 0.7 Ohm or more and 1.3 Ohm or less, 0.8 Ohm or more and 1.2 Ohm or less, or 0.9 Ohm or more and 1.1 Ohm or less. For example, the electrical resistance of the cell may be about 0.6 Ohm or more and 0.8 Ohm or less.

According to another embodiment of the present disclosure, an electrochemical device includes an anode, a cathode, and a separator interposed between the anode and the cathode, in which the separator is the separator of the above-described embodiment. The electrochemical device may be manufactured by inserting an electrode assembly including an anode, a cathode, and a separator interposed between the anode and the cathode into a case or pouch, and sealing the case or pouch. Before sealing the case or pouch, the electrode assembly may be impregnated with the electrolyte solution by injecting the electrolyte solution. The shape of the case or pouch is not limited. For example, the electrochemical device may be a cylindrical, prismatic, coin-shaped, or pouch-shaped lithium secondary battery.

The anode and the cathode may be coated by applying and drying an electrode active material on at least one surface of each collector. The collector may be a material that has conductivity without causing chemical changes in the electrochemical device. Examples of the collector for the anode include aluminum, nickel, titanium, fired carbon, and stainless steel; and aluminum or stainless steel which is subjected to surface treatment with carbon, nickel, titanium, or silver, but not limited thereto. Examples of the collector for the cathode include copper, nickel, titanium, fired carbon, and stainless steel; and copper or stainless steel which is subjected to surface treatment with carbon, nickel, titanium, or silver, but not limited thereto. The collector may be in various forms, such as a thin metal plate, film, foil, net, porous material, or foam.

The anode includes an anode collector and an anode active material layer containing an anode active material, a conductive material, and a binder resin on at least one surface of the collector. The anode active material includes layered compounds such as lithium manganese composite oxide (e.g., LiMn₂O₄ and LiMnO₂), lithium cobalt oxide (LiCoO₂), and lithium nickel oxide (LiNiO₂), or a compound substituted with one or more transition metal elements; lithium manganese oxides represented by the formulas Li₁₊ₓMn₂₋ₓO₄ (where x is 0 to 0.33), LiMnO₃, LiMn₂O₃, or LiMnO₂; lithium copper oxide (Li₂CuO₂); vanadium oxides such as LiV₃O₈, LiV₃O₄, V₂O₅, Cu₂V₂O₇; Ni-site type lithium nickel oxides represented by the formula LiNi₁₋ₓMₓO₂ (where M = Co, Mn, Al, Cu, Fe, Mg, B, or Ga, and x = 0.01 to 0.3); lithium manganese complex oxides represented by the formula LiMn₁₋ₓMₓO₂ (where M = Co, Ni, Fe, Cr, Zn, or Ta, and x = 0.01 to 0.1) or Li₂Mn₃MO₈ (where M = Fe, Co, Ni, Cu, or Zn); LiMn₂O₄ in which some of Li in the formula is replaced with an alkaline earth metal ion; disulfide compounds; Fe₂(MoO₄)₃, which may be used alone or in mixture of two or more thereof.

The cathode includes a cathode collector and a cathode active material layer containing a cathode active material, a conductive material, and a binder resin on at least one surface of the collector. The cathode active material in the cathode includes carbon such as lithium metal oxide, hard carbon, and graphitic carbon; silicon-based materials such as LiₓFe₂O₃ (0≤x≤1), LiₓWO₂ (0≤x≤1), Si, SiOₓ (0<x<2), SiC, and Si alloy; metal complex oxides such as SnₓMe₁₋ₓMe'_{y}O_{z} (Me: Mn, Fe, Pb, Ge; Me': Al, B, P, Si, elements of groups 1, 2, and 3 of the periodic table, halogen; 0<x≤1; 1≤y ≤3; 1≤z≤8); lithium metal; lithium alloy; tin-based alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; and titanium oxide, which may be used alone or in mixture of two or more thereof.

The conductive material may be any one or a mixture of two or more conductive materials selected from the group consisting of graphite, carbon black, carbon fiber or metal fiber, metal powder, conductive whisker, conductive metal oxide, carbon nanotube, activated carbon, and polyphenylene derivative. The carbon nanotube has a graphite sheet in a shape of a cylinder having a nano-sized diameter and a sp² bond structure, and exhibits conductor or semiconductor characteristics according to the angle and structure at which the graphite sheet is rolled. The carbon nanotube may be categorized as a single-walled carbon nanotube (SWCNT), a double-walled carbon nanotube (DWCNT), and a multi-walled carbon nanotube (MWCNT) based on the number of bonds that make up their walls, and the carbon nanotube may be appropriately selected based on the application of the dispersion. For example, the conductive material may be one selected from the group consisting of natural graphite, artificial graphite, super-p, acetylene black, Ketjen black, channel black, furnace black, lamp black, summer black, Denka black, aluminum powder, nickel powder, zinc oxide, potassium titanate, and titanium oxide, or a mixture of two or more thereof.

The binder resin that may be used herein may be any binder resin commonly used for electrodes of electrochemical devices. Non-limiting examples of the binder resin include polyvinylidene fluoride-co-hexafluoropropylene, polyvinylidene fluoride-co-trichloroethylene, poly(methyl methacrylate), poly(ethylhexyl acrylate), poly(butyl acrylate), polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, and carboxyl methyl cellulose, but is not limited thereto.

The electrolyte may be obtained by dissolving or dissociating a salt with a structure such as A⁺B⁻, in which A⁺ includes an alkali metal cation such as Li⁺, Na⁺, or K⁺, or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, or C(CF₂SO₂)₃⁻, or a combination thereof, in an organic solvent such as propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), γ-butyrolactone, or a mixture thereof.

For example, the electrolyte may contain a solvent having a weight ratio of EC/EMC of approximately 3/7, or a solvent having a weight ratio of ethylene carbonate (EC)/ethyl methyl carbonate (EMC)/dimethyl carbonate (DMC) of approximately 20/5/75, which may maximize the dimensional stability of the separator according to the above embodiments.

The electrochemical device including the electrode assembly may be a lithium secondary (rechargeable) battery. The battery may be used as a unit cell, and may be used as a battery module including the unit cell, a battery pack including the battery module, and a device including the battery pack as a power source. Examples of the device include devices such as computers, mobile phones, and power tools; electric cars, including electric vehicles (EVs), hybrid electric vehicles (HEVs), and plug-in hybrid electric vehicles (PHEVs) powered by electric motors; electric two-wheeled vehicles, including electric bicycles (E-bikes) and electric scooters (E-scooters); electric golf carts, and the like; and medium to large devices such as power storage systems, and the like.

Another embodiment of the present invention provides a method for preparing a separator for an electrochemical device, including forming a porous coating layer containing an acrylic acid-based binder, an acrylamide-based binder, and inorganic particles on at least one surface of a porous polymer substrate. Contents that overlap with the contents described in the separator for the electrochemical device are replaced with the explanation of the preceding embodiment.

The step of forming the porous coating layer includes preparing a coating slurry containing an acrylic acid-based binder and an acrylamide-based binder as polymer binders, inorganic particles, a dispersant, and a dispersion medium, applying the coating slurry to a porous polymer substrate, followed by drying. For example, the coating slurry may be prepared by first mixing an acrylamide-based binder, inorganic particles, a dispersant, and a dispersion medium, and then adding an acrylic acid-based binder to prevent aggregation and precipitation of the acrylamide-based binder and the acrylic acid-based binder.

The step of forming the porous coating layer may further include performing a corona discharge treatment on at least one surface of the porous polymer substrate before applying the coating slurry to the porous polymer substrate. The step of performing the corona discharge treatment on at least one surface of the porous polymer substrate may prevent a decrease in the binding force between the surface of the porous polymer substrate and the surface of the coating layer at a high temperature, and prevent the binding force between the surface of the polymer substrate and the surface of the coating layer from being lowered by the electrolyte.

The corona discharge treatment may be performed on at least one surface of the porous polymer substrate at a voltage of 0.1 kV or more and 10 kV or less in air. For example, the corona discharge treatment may be performed at a voltage of 0.2 kV or more and 9 kV or less, 0.3 kV or more and 8 kV or less, 0.4 kV or more and 7 kV or less, 0.5 kV or more and 6 kV or less, 0.6 kV or more and 5 kV or less, 0.7 kV or more and 4 kV or less, 0.8 kV or more and 3 kV or less, 0.9 kV or more and 2 kV or less, or 1.0 kV or more and 2 kV or less. For example, the corona discharge treatment may be performed at a voltage of 1.8 kV in air. When the applied voltage of the corona discharge treatment is adjusted within the above-mentioned range, an appropriate number of functional groups may be formed on the surface of the polymer substrate, and damage to the surface of the polymer substrate may be prevented.

The step of forming the porous coating layer may include applying the coating slurry to the porous polymer substrate to form a coating. For example, the coating may be formed by, but not limited to, a bar coater, a wire bar coater, a roll coater, a spray coater, a spin coater, an inkjet coater, a screen coater, a reverse coater, a gravure coater, a knife coater, a slot die coater, a hot melt coater, a comma coater, and a direct metering coater. For example, the step of forming said coating layer may include simultaneously coating both surfaces of the porous polymeric substrate with the coating slurry using a bar coater or a slot die coater.

The step of forming the porous coating layer may include applying the coating slurry to the porous polymer substrate, followed by drying or heating the coating layer to evaporate the dispersion medium contained in the coating layer. The removal of the dispersion medium may be performed at a temperature capable of evaporating only the dispersion medium contained in the coating layer without modifying the polymer binder contained in the coating layer. For example, the removal of the dispersion medium may be implemented by heating the coating layer to a predetermined temperature, but ensuring that the temperature of the surface of the coating layer does not exceed 60 °C. When heating the coating layer under the above conditions, the thermal energy may be used first to heat the dispersion medium and change the phase, and may not be used to modify the polymer binder.

Hereinafter, the present disclosure will be described in more detail with reference to specific examples and experimental examples. The following examples and experimental examples are only illustrative of the present disclosure, and the present disclosure is not limited to the following examples and experimental examples.

### Example 1

### Preparation of Coating Slurry

In a 250 mL wide mouth round bottle at room temperature (25 °C), 5.4 g of acrylamide-based binder (polyacrylamide, Mw: 900,000) (solid content 10%) and 30 g of Al₂O₃ (particle size: 500 nm) as inorganic particles were added to 67 mL of water, beads were further added, and the bottle was shaken to mix.

To the bottle, 2.1 g of acrylic acid-based binder (polyacrylic acid, Mw: 350,000) (solid content 25%) and 1.1 g of polyacrylic acid-based polymer dispersant (solid content 42%) were added and stirred twice with a shaker (total 2 hours), and then 0.2 g of wetting agent (solid content 100%) was added and stirred for another 15 minutes with a shaker to prepare a slurry.

The slurry was filtered to remove any lumps, and a coating slurry with a solid content of 30% and a pH of 7.0 was prepared.

### Preparation of Porous Polymer Substrate

A polyethylene film with a size of 20 cm × 30 cm and a thickness of 10 µm was used as the porous polymer substrate.

### Preparation of Separator

The coating slurry was coated on both surfaces of a polyethylene film using a bar coater to form a coating layer having a thickness of 1.5 µm.

The process of applying air volume to the polyethylene film on which the coating layer was formed and removing the dispersion medium was repeated five times to prepare a separator with a total thickness of 13 µm.

### Comparative Example 1

A separator was prepared in the same manner as in Example 1, except that a polyacrylic acid-based polymer dispersant (solid content 25%) having a different degree of substitution than the dispersant of Example 1 was used in the preparation of the coating slurry to adjust the pH of the coating slurry to 2.5.

### Example 2

A separator was prepared in the same manner as in Example 1, except that polyacrylamide (Mw: 400,000, solid content 15%) was used as an acrylamide-based binder in the preparation of the coating slurry.

### Comparative Example 2

A separator was prepared in the same manner as in Example 1, except that polyacrylamide (Mw: 1,200,000, solid content 5%) was used as an acrylamide-based binder in the preparation of the coating slurry.

### Example 3

A separator was prepared in the same manner as in Example 1, except that 3 g of polyacrylic acid (solid content 25%) and 0.32 g of polyacrylamide (solid content 10%) was used in the preparation of the coating slurry.

### Example 4

A separator was prepared in the same manner as in Example 1, except that 1.3 g of polyacrylic acid (solid content 25%) and 7.6 g of polyacrylamide (solid content 10%) was used in the preparation of the coating slurry.

### Comparative Example 3

A separator was prepared in the same manner as in Example 1, except that 4.3 g of polyacrylic acid (solid content 25%) was used and no acrylamide-based binder was used in the preparation of the coating slurry.

### Comparative Example 4

A separator was prepared in the same manner as in Example 1, except that 11 g of polyacrylamide (solid content 10%) was used and no acrylic acid-based binder was used in the preparation of the coating slurry.

### Experimental Example 1. Determination of properties of the separator according to the properties of the coating slurry

The properties of the separators prepared according to Example 1 and Comparative Example 1 were confirmed and shown in Table 1 below.

### Confirmation of improvement in dry state heat shrinkage rate

The separators of Examples and Comparative Examples were each prepared as specimens with a size of 5 cm × 5 cm. After being stored in a convection oven at 200 °C for 30 minutes, heat shrinkage rates in the machine direction (MD) and transverse direction (TD) were calculated according to [(length of the initial specimen - length after storage at 200 °C for 0.5 h)/(length of the initial specimen)] × 100 (%), respectively.

### Confirmation of improvement in wet state heat shrinkage rate

The separators of Examples and Comparative Examples were prepared as specimens with a size of 5 cm × 5 cm and inserted into aluminum pouches with a size of 7 cm × 10 cm in size. The pouch was filled with 1 g of the following electrolyte solution, and the pouch was sealed.

Electrolyte 1, which contains a solvent containing a mixture of ethylene carbonate (EC)/ethyl methyl carbonate (EMC) in a weight ratio of 3/7 with 2% by weight of vinylene carbonate (VC) and 1 M of lithium salt LiPF₆ as additives, was used.

Electrolyte 2, which contains a solvent containing a mixture of ethylene carbonate (EC)/ethyl methyl carbonate (EMC)/dimethyl carbonate (DMC) in a weight ratio of approximately 20/5/75 was used. After the sealed pouch was stored in a convection oven at 135 °C for 30 minutes, the separator was taken out, and the heat shrinkage rates in the machine direction (MD) and transverse direction (TD) were calculated according to [(length of the initial specimen - length after storage at 135 °C for 0.5 h)/(length of the initial specimen)] × 100 (%), respectively.

**Table 1**

| | Comparative Example 1 | Example 1 |
|---|---|---|
| pH of coating slurry | 2.5 | 7.0 |
| Weight ratio of PAA:PAM | 5:5 | 5:5 |
| Thickness of separator (µm) | 13.0 | 13.0 |
| Dry state heat shrinkage rate at 200°C for 0.5 h (MD (%)/TD (%)) | 59/57 | 3/3 |
| In electrolyte 1, wet state heat shrinkage rate at 135 °C for 0.5 h (MD (%)/TD (%)) | 18/18 | 6/5 |
| In electrolyte 2, wet state heat shrinkage rate at 135 °C for 0.5 h (MD (%)/TD (%)) | 19/18 | 6/5 |

### Experimental Example 2. Determination of properties of the separator according to the molecular weight of the acrylamide-based binder

The conditions of the separators prepared according to Examples 1 to 2 and Comparative Example 2 were confirmed, and the properties of each separator were determined and shown in Table 2 below. The method for confirming each property is the same as the previous experimental example.

**Table 2**

| | Comparative Example 2 | Example 1 | Example 2 |
|---|---|---|---|
| Weight average molecular weight of PAM | 1,200,000 | 900,000 | 400,000 |
| Weight ratio of PAA:PAM | 5:5 | 5:5 | 5:5 |
| Thickness of separator (µm) | 13.0 | 13.0 | 13.0 |
| Dry state heat shrinkage rate at 200°C for 0.5 h (MD (%)/TD (%)) | Unable to coat due to increased viscosity of coating slurry (>500 cps) | 3/3 | 3/2 |
| In electrolyte 1, wet state heat shrinkage rate at 135 °C for 0.5 h (MD (%)/TD (%)) | | 6/5 | 5/5 |
| In electrolyte 2, wet state heat shrinkage rate at 135 °C for 0.5 h (MD (%)/TD (%)) | | 6/5 | 5/5 |

### Experimental Example 3. Determination of properties of the separator according to the weight ratio of the acrylic acid-based binder and the acrylamide-based binder

The conditions of the separators prepared according to Examples 1, 3, and 4 and Comparative Examples 3 and 4 were confirmed, and the properties of each separator were determined and shown in Table 3 below. The method for confirming each property is the same as the previous experimental example.

**Table 3**

| | Comparative Example 3 | Example 3 | Example 1 | Example 4 | Comparative Example 4 |
|---|---|---|---|---|---|
| Weight ratio of PAA:PAM | 10:0 | 7:3 | 5:5 | 3:7 | 0:10 |
| Thickness of separator (µm) | 13.0 | 13.0 | 13.0 | 13.0 | 13.0 |
| Dry state heat shrinkage rate at 200°C for 0.5 h (MD (%)/TD (%)) | 1/1 | 3/2 | 3/3 | 5/5 | 55/50 |
| In electrolyte 1, wet state heat shrinkage rate at 135 °C for 0.5 h (MD (%)/TD (%)) | 27/25 | 6/5 | 6/5 | 6/5 | 15/13 |
| In electrolyte 2, wet state heat shrinkage rate at 135 °C for 0.5 h (MD (%)/TD (%)) | 18/20 | 6/5 | 6/5 | 5/5 | 14/12 |

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A separator for an electrochemical device, comprising:
a porous polymer substrate; and
a porous coating layer formed on at least one surface of the porous polymer substrate,
wherein the porous coating layer contains an acrylic acid-based binder, an acrylamide-based binder, and inorganic particles,
the porous coating layer contains 90% by weight to 96% by weight of the inorganic particles based on the total weight of the porous coating layer, and
a weight ratio of the acrylic acid-based binder and the acrylamide-based binder is 3:7 to 7:3.

2. The separator according to claim 1, wherein the acrylamide-based binder has a weight average molecular weight of 400,000 to 1,000,000.

3. The separator according to claim 1, wherein the porous coating layer is formed by coating a coating slurry containing the acrylic acid-based binder, the acrylamide-based binder, the inorganic particles, a dispersant, and a dispersion medium, on the porous polymer substrate, and
pH of the coating slurry is 3 to 9.

4. The separator according to claim 1, wherein the acrylic acid-based binder includes a repeating unit including one or more monomers selected from the group consisting of acrylic acid and methacrylic acid.

5. The separator according to claim 1, wherein the acrylamide-based binder includes a repeating unit including one or more monomers selected from the group consisting of acrylamide, methacrylamide, N-ethylacrylamide, ethylmethacrylamide, N-propylacrylamide, N-isopropylacrylamide, N-isopropylmethacrylamide, N-butylacrylamide, and N-butylmethacrylamide.

6. The separator according to claim 1, wherein a content of the acrylic acid-based binder in the porous coating layer is greater than or equal to a content of the acrylamide-based binder.

7. An electrochemical device comprising:
anode;
cathode; and
a separator disposed between the anode and the cathode,
wherein the separator includes a porous polymer substrate, and a porous coating layer formed on at least one surface of the porous polymer substrate,
the porous coating layer contains an acrylic acid-based binder, an acrylamide-based binder, and inorganic particles,
the porous coating layer contains 90% by weight to 96% by weight of the inorganic particles based on the total weight of the porous coating layer, and
a weight ratio of the acrylic acid-based binder and the acrylamide-based binder is 3:7 to 7:3.

8. The electrochemical device according to claim 7, further comprising:
an electrolyte containing a solvent in which ethylene carbonate (EC) and ethyl methyl carbonate (EMC) are mixed in a weight ratio of 3:7, or a solvent in which ethylene carbonate (EC), ethyl methyl carbonate (EMC), and dimethyl carbonate (DMC) are mixed in a weight ratio of 20:5:75.

9. The electrochemical device according to claim 7, wherein the acrylamide-based binder has a weight average molecular weight of 400,000 to 1,000,000.

10. The electrochemical device according to claim 7, wherein the porous coating layer is formed by coating a coating slurry containing the acrylic acid-based binder, the acrylamide-based binder, the inorganic particles, a dispersant, and a dispersion medium, on the porous polymer substrate, and
pH of the coating slurry is 3 to 9.

11. The electrochemical device according to claim 7, wherein the acrylic acid-based binder includes a repeating unit including one or more monomers selected from the group consisting of acrylic acid and methacrylic acid.

12. The electrochemical device according to claim 7, wherein the acrylamide-based binder includes a repeating unit including one or more monomers selected from the group consisting of acrylamide, methacrylamide, N-ethylacrylamide, ethylmethacrylamide, N-propylacrylamide, N-isopropylacrylamide, N-isopropylmethacrylamide, N-butylacrylamide, and N-butylmethacrylamide.

13. The electrochemical device according to claim 7, wherein a content of the acrylic acid-based binder in the porous coating layer is greater than or equal to a content of the acrylamide-based binder.
